# EUROPÄISCHE PATENTSCHRIFT

(11) **EP 1 418 378 B1**
(45) Veröffentlichungstag und Bekanntmachung des Hinweises auf die Patenterteilung: **13.06.2012**
(21) Anmeldenummer: 03024196.2
(22) Anmeldetag: 21.10.2003
(51) Int. Cl.: F16L 41/12, B26F 1/00, F16L 41/06

(54) **Befestigungsvorrichtung zum Befestigen einer Düse an einer Fluidleitung**
Mounting for fixing a nozzle to a fluid conduit
Element pour la fixation d'une buse à une conduite de fluide

(30) Priorität: 07.11.2002 DE 10252242
(43) Veröffentlichungstag der Anmeldung: 12.05.2004
(73) Patentinhaber: Kenter, Alfons, 49685 Halen (DE)
(72) Erfinder: Kenter, Alfons, 49685 Halen (DE)
(74) Vertreter: Tappe, Udo

(56) Entgegenhaltungen:
- WO-A-01/79741
- GB-A- 897 376
- GB-A- 1 363 583
- US-A- 3 132 881
- US-A- 3 698 419
- US-A- 5 398 718

## Beschreibung

Die Erfindung betrifft eine Befestigungsvorrichtung zum Befestigen einer Düse an einer Fluidleitung mit einem Basiskörper zum Aufnehmen einer Düse und mit einem mit dem Basiskörper einstückigen ersten Klemmstück zum Befestigen des Basiskörpers an der Fluidleitung, mit einem mit dem ersten Klemmstück in Eingriff bringbaren zweiten Klemmstück, das zum Befestigen des Basiskörpers an der Fluidleitung formschlüssig mit dem ersten Klemmstück verbindbar ist, und mit einem Dichtmittel zum fluiddichten Abdichten einer Verbindungsstelle des Basiskörpers mit der Fluidleitung.

Eine derartige Befestigungsvorrichtung ist aus der US 3,132,881 bekannt.

Bei einer aus der WO 01/79741 A1 zu entnehmenden Befestigungsvorrichtung wird der Basiskörper mittels des ersten Klemmstückes auf die Fluidleitung geklemmt. Die Fluidleitung hat in ihrer Außenwand eine Bohrung, die auf diese Art mit einer Zentralbohrung in dem Basiskörper in Verbindung steht. Durch das einfache Aufklemmen des Basiskörpers mittels des Klemmstückes auf die Fluidleitung wird die Verbindung zwischen dem Basiskörper und der Fluidleitung hergestellt. Die bekannte Befestigungsvorrichtung wird bei der Klimaverbesserung in Tierställen verwendet. Hierbei ist eine einfache Herstellung der Befestigung von Bedeutung, da eine große Anzahl von Düsen an der Fluidleitung befestigt werden muß und möglichst geringe Kosten durch die Montage entstehen sollen. Nachteilig bei der bekannten Befestigungsvorrichtung ist aber, daß sich nur ein verhältnismäßig geringer Anpreßdruck des Basiskörpers an die Fluidleitung erzielen läßt, weil das erste Klemmstück nach Aufklemmen auf die Fluidleitung ein Stück weit zurückfedern kann. Wenn außerdem nach einer gewissen Einsatzzeit die Materialien, insbesondere eines Dichtungselementes zum Abdichten der Verbindung zwischen dem Basiskörper und der Fluidleitung, ermüden, läßt sich eine Undichtigkeit nur durch Auswechseln dieser Dichtmittel, beispielsweise eines Dichtringes, beseitigen.

Das der Erfindung zugrundeliegende Problem ist es, eine Befestigungsvorrichtung anzugeben, mit der sich eine Düse auf einfache und schnelle Weise an eine Fluidleitung anbringen läßt, wobei gleichzeitig aber eine hohe Anpreßkraft des Basiskörpers an die Fluidleitung ermöglicht wird.

Das Problem wird dadurch gelöst, daß bei einer Befestigungsvorrichtung der eingangs genannten Art der Basiskörper ein Anschlußstück zum Verbinden mit dem Innenraum der Fluidleitung aufweist, das zum Durchdringen der Wand der Fluidleitung vorgesehen ist.

Mittels des zweiten Klemmstückes läßt sich eine sichere Klemmverbindung des Basiskörpers an der Fluidleitung mit dem ersten Klemmstück und dem zweiten Klemmstück herstellen. Ein Zurückfedern des ersten Klemmstückes läßt sich so durch das zweite Klemmstück wirksam verhindern.

Das zweite Klemmstück ist zum Befestigen des Basiskörpers an der Fluidleitung formschlüssig mit dem ersten Klemmstück verbindbar. Diese formschlüssige Verbindung ermöglicht eine sichere Verbindung bei hoher Anpreßkraft. Ein Nachlassen der Anpreßkraft durch Ermüdung wird so weitgehend verhindert.

Da der Basiskörper ein Anschlußstück zum Verbinden mit dem Innenraum der Fluidleitung aufweist, ist eine besonders wirksame und zuverlässige Fluidverbindung herstellbar. Hierbei ist das Anschlußstück zum Durchdringen der Wand der Fluidleitung vorgesehen. Auf diese Weise ergibt sich ein sicherer Sitz und das Anschlußstück dient gleichzeitig zum Positionieren des Basiskörpers in bezug auf die Öffnung in der Fluidleitung.

Da Dichtmittel zum fluiddichten Abdichten einer Verbindungsstelle des Basiskörpers mit der Fluidleitung vorgesehen sind, lassen sich auf diese Weise auch bei moderaten Anpreßdrucken Leckagen vermeiden.

Bei einer vorteilhaften Ausgestaltung weisen das erste Klemmstück und das zweite Klemmstück einander zugeordnete schräge Flächen auf, wobei beim Verschieben der Klemmstücke zueinander entlang der schrägen Flächen der Basiskörper an die Fluidleitung anpreßbar ist. Auf diese Weise werden das erste Klemmstück und das zweite Klemmstück miteinander gleichsam verkeilt, wodurch die erforderliche Anpreßkraft erzeugt wird. Vorzugsweise sind die schrägen Flächen selbsthemmend ausgebildet. Es können auch Hemmelemente zum Verhindern eines Auseinandergleitens der schrägen Flächen vorgesehen sein.

Bei einer anderen vorteilhaften Ausgestaltung weisen das erste Klemmstück und das zweite Klemmstück einander zugeordnete Rastelemente auf, die beim Zusammenpressen des ersten Klemmstücks und des zweiten Klemmstücks in Eingriff kommen und ein Lösen des ersten Klemmstücks und des zweiten Klemmstücks voneinander verhindern. Auf diese Weise lassen sich die beiden Klemmstücke gleichsam miteinander verpressen. Je fester das erste Klemmstück und das zweite Klemmstück zusammengepreßt werden, desto größer ist die Anpreßkraft des Basiskörpers an die Fluidleitung.

Eine Weiterbildung der Erfindung ist dadurch gekennzeichnet, daß das erste Klemmstück und/oder das zweite Klemmstück eine Aufnahme für die Fluidleitung aufweisen, wobei die Form der Aufnahme der Form der Außenumfangsfläche der Fluidleitung entspricht. Mittels dieser Aufnahme läßt sich ein besonders sicherer und fester Sitz erzielen.

Es ist weiter von Vorteil, wenn das Dichtmittel das Anschlußstück umgibt. Hierdurch wird der Bereich um die Öffnung in der Fluidleitung herum abgedichtet.

Ein weiterer Aspekt der Erfindung betrifft ein Verfahren zum Herstellen einer Verbindung einer Befestigungsvorrichtung, bei dem mittels eines Dorns ein Wandbereich der Fluidleitung zum Erzeugen einer Öffnung durchstoßen wird, bei dem die Befestigungsvorrichtung der Öffnung benachbart angeordnet wird, und bei dem die Befestigungsvorrichtung mittels Ineingriffbringens des zweiten Klemmstücks mit dem ersten Klemmstück an der Fluidleitung befestigt wird, wobei das Anschlußstück in der Öffnung angeordnet wird und das Anschlußstück von einem Dichtmittel umgeben wird. Mittels dieses Verfahrens läßt sich die Verbindung schnell, zuverlässig und dauerhaft herstellen.

Vorzugsweise wird die Wand der Fluidleitung die Öffnung umgebend einwärts umgebogen. Dadurch wird einerseits ein wirkungsvolles Dichtungslager gebildet. Andererseits ergibt sich eine wirkungsvolle Führung für das Anschlußstück.

Ein dritter Aspekt der Erfindung betrifft ein Werkzeug zum Durchführen des Verfahrens zum Herstellen einer Verbindung mit einer Basis, mit einem ersten Druckstück, einem ersten Griffstück, einem schwenkbar daran befestigten zweiten Griffstück, einem an das erste Druckstück herangeführten zweiten Druckstück, wobei mittels eines Getriebes das zweite Druckstück beim Heranschwenken des zweiten Griffstücks an das erste Griffstück an das erste Druckstück heranschwenkbar ist, wobei das zweite Druckstück linear an das erste Druckstück herangeführt ist, und wahlweise zwei Aufnahmestücke, die gemeinsam eine Aufnahme für die Fluidleitung bilden, oder zwei Klemmstücke zum Befestigen einer Düse an einer Fluidleitung den beiden Druckstücken zuordnenbar sind. Mittels dieses Werkzeugs kann das erste Klemmstück der Befestigungsvorrichtung mit dem zweiten Klemmstück in Eingriff gebracht werden. Die beiden Griffstücke in Verbindung mit dem Getriebe ermöglichen dann eine leichte Handhabung beim Befestigen der beiden Klemmstücke aneinander derart, daß eine hinreichend große Anpreßkraft erzeugt wird.

Wenn das Werkzeug ein der Basis zugeordnetes erstes Aufnahmestück und ein dem Druckstück zugeordnetes zweites Aufnahmestück aufweist, die gemeinsam eine Aufnahme für die Fluidleitung bilden, wobei mindestens das erste Aufnahmestück oder das zweite Aufnahmestück einen Dorn aufweisen, läßt sich dieses Werkzeug gleichzeitig auch zum Herstellen der Öffnung in der Wand der Fluidleitung verwenden.

Vorzugsweise sind das erste Klemmstück und das zweite Klemmstück mittels des Werkzeugs in Eingriff bringbar. So läßt sich mit geringem Aufwand eine feste Verbindung des ersten Klemmstücks mit dem zweiten Klemmstück herstellen, die eine hohe Anpreßkraft des Basiskörpers an die Fluidleitung erzeugen.

Im folgenden werden Ausführungsbeispiele der Erfindung anhand der Figuren näher erläutert. Es zeigen:
- Fig. 1: eine Befestigungsvorrichtung mit den Erfindungsmerkmalen in einem montierten Zustand als ein erstes Ausführungsbeispiel der Erfindung,
- Fig. 2: die Befestigungsvorrichtung von Fig. 1 in einem von einer Fluidleitung abgenommenen Zustand,
- Fig. 3: die Befestigungsvorrichtung von Fig. 2 in einem um 90° gedrehten Schnitt,
- Fig. 4: eine Befestigungsvorrichtung mit den Erfindungsmerkmalen als ein weiteres Ausführungsbeispiel der Erfindung in einem montierten Zustand,
- Fig. 5: die Befestigungsvorrichtung von Fig. 4 in einem von einer Fluidleitung abgenommenen Zustand,
- Fig. 6: die Befestigungsvorrichtung von Fig. 5 in einem um 90° gedrehten Schnitt,
- Fig. 7: ein Werkzeug zum Erzeugen einer Öffnung in einer Wand einer Fluidleitung in einem zusammengeführten Zustand,
- Fig. 8: das Werkzeug von Fig. 7 in einem geöffneten Zustand,
- Fig. 9: ein Werkzeug zum Durchführen des Verfahrens mit den Erfindungsmerkmalen, und
- Fig.: 10 eine Darstellung einer Befestigungsvorrichtung ähnlich Fig. 1 mit einem Hemmelement an einer schrägen Fläche.

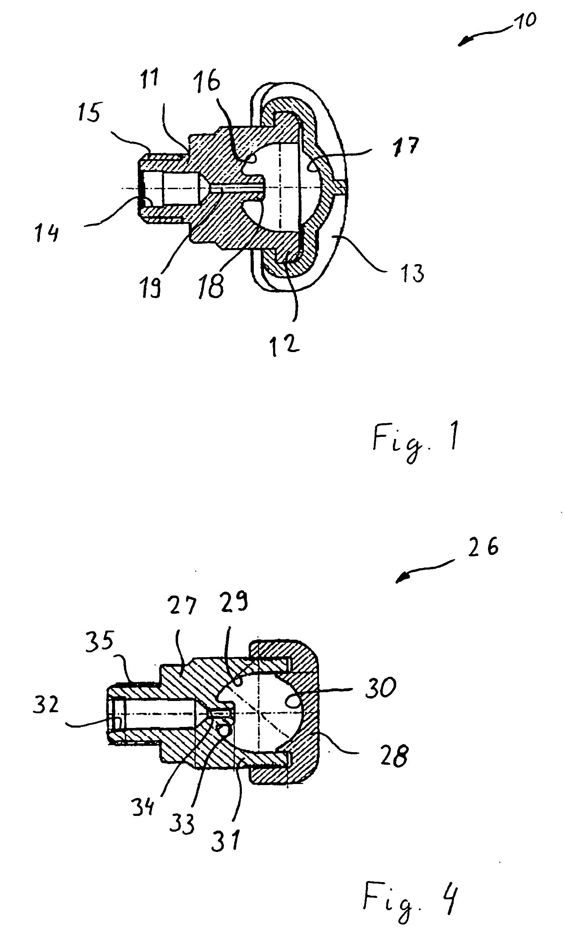

Fig. 1 zeigt eine Befestigungsvorrichtung 10 mit den Erfindungsmerkmalen als ein erstes Ausführungsbeispiel der Erfindung. Die Befestigungsvorrichtung 10 weist einen Basiskörper 11 für eine nicht in der Figur dargestellte Düse mit einem ersten Klemmstück 12 und einem zweiten Klemmstück 13 auf. Die Klemmstücke 12, 13 sind bei dem in Fig. 1 dargestellten montierten Zustand miteinander in Eingriff. An seinem von dem zweiten Klemmstück 13 abgewandten Ende hat der Basiskörper 11 eine im wesentlichen zylinderförmige Aufnahme 14 für eine Düse. Die Aufnahme 14 umgebend weist der Basiskörper 11 ein Außengewinde 15 auf. In der Aufnahme 14 kann eine Düse angeordnet werden, die mittels Verschrauben einer Überwurfkappe mit dem Außengewinde 15 in der Aufnahme 14 fixiert werden kann.

Der Basiskörper 11 und das zweite Klemmstück 13 weisen einander jeweils zugewandte Aufnahmen 16, 17 für eine Fluidleitung auf. Dem zweiten Klemmstück 13 zugewandt ist außerdem im Bereich der Aufnahme 16 ein Anschlußstück 18 angeordnet. Das Anschlußstück 18 hat einen im wesentlichen zylinderförmigen Querschnitt. Im Innern des Anschlußstückes 18 verläuft zentral eine Bohrung 19, die in die Aufnahme 14 mündet. Das der Bohrung 19 zugewandte Ende der Aufnahme 14 ist als ein Ventilsitz ausgebildet. Beim Montieren einer Düse in der Aufnahme 14 kann somit eine Kugel aus Stahl oder einem anderen geeigneten Material in die Aufnahme eingesetzt und mittels einer Feder vorgespannt werden. Auf diese Weise wird ein Nachtropfen nach Abschalten einer Wasserzufuhr verhindert.

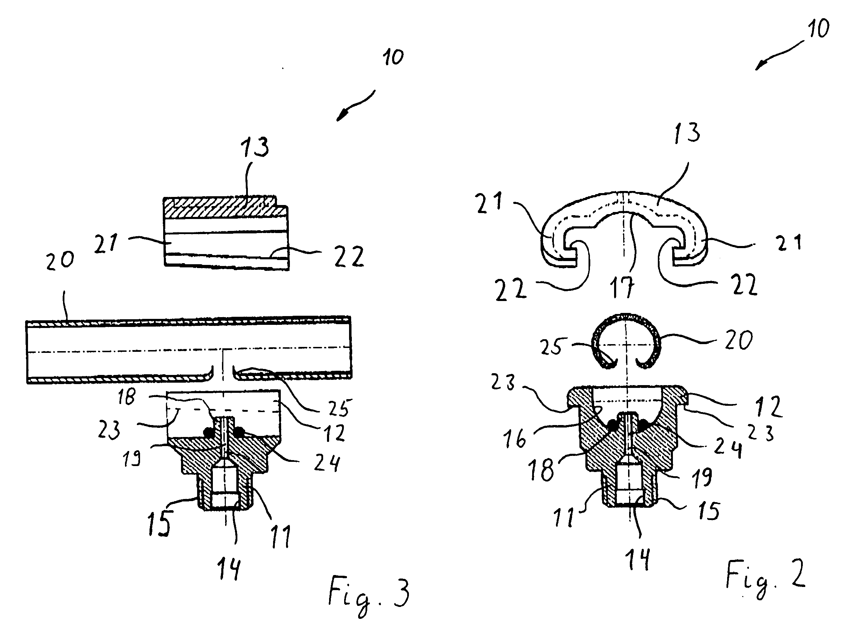

Fig. 2 zeigt die Befestigungsvorrichtung 10 von Fig. 1 in einem von einer Fluidleitung 20 abgenommenen Zustand. Fig. 3 zeigt eine Darstellung ähnlich Fig. 2 in einem um 90° gedrehten Schnitt. Das zweite Klemmstück 13 weist an seinen voneinander abgewandten Enden jeweils in Fig. 2 hakenförmige Klemmsitze 21 auf, die an ihren der Aufnahme 17 zugewandten Enden jeweils schräge Flächen 22 haben.

Das erste Klemmstück 12 ist in dem in Fig. 2 dargestellten Schnitt ausgekragt ausgebildet, wobei die Auskragung an ihrer von dem zweiten Klemmstück 13 abgewandten Seite den schrägen Flächen 22 zugeordnete schräge Flächen 23 aufweist. Eine schräge Fläche 23 ist in Fig. 3 mittels einer gestrichelt eingezeichneten Linie dargestellt. Das Anschlußstück 18 umgebend ist im Bereich der Aufnahme 16 ein O-Ring 24 angeordnet. Ein eine Öffnung der Fluidleitung 20 umgebender Bereich 25 ist in den Fig. 2 und 3 nach innen hin umgebogen.

Zum Befestigen der Befestigungsvorrichtung 10 an der Fluidleitung 20 wird der Basiskörper 11 in den Fig. 2 und 3 von unten her auf die Fluidleitung 20 derart aufgesteckt, daß das Anschlußstück 18 in die Öffnung der Fluidleitung 20 eingeschoben wird. Dabei wird das Anschlußstück 18 von dem umgebogenen Bereich 25 ähnlich einer Führung geführt. Der Bereich um den umgebogenen Bereich 25 der Fluidleitung 20 kommt dabei auf dem O-Ring 24 zu liegen. In diesem Zustand wird das zweite Klemmstück 13 auf die Fluidleitung 20 ein Stück weit in der Fig. 3 nach links zu dem Basiskörper 11 versetzt aufgesetzt. Anschließend wird das zweite Klemmstück 13 in der Fig. 3 nach rechts derart auf der Fluidleitung 20 verschoben, daß die Klemmsitze 21 mit den ersten Klemmstücken 12 in Eingriff treten. Dabei gelangen die schrägen Flächen 22 mit den schrägen Flächen 23 jeweils in Eingriff. Beim Verschieben des zweiten Klemmstückes 13 in der Fig. 3 nach rechts gleiten dabei die schrägen Flächen 22 auf den schrägen Flächen 23, wodurch eine feste Verbindung der Befestigungsvorrichtung 10 mit der Fluidleitung 20 hergestellt wird. Insbesondere dichtet der O-Ring 24 dabei den Bereich um die Öffnung in der Fluidleitung 20 herum ab. Die schrägen Flächen 22, 23 können dabei selbsthemmend oder mit einer Verzahnung ausgebildet sein. Je weiter das zweite Klemmstück 13 beim Befestigen in Fig. 3 nach rechts zu dem Basiskörper 11 verschoben wird, umso fester wird der Basiskörper 11 gegen die Fluidleitung 20 gepreßt. Auf diese Weise läßt sich eine fluiddichte Verbindung herstellen. Sollte nach einiger Zeit der O-Ring 24 plastisch verformt werden oder an Elastizität verlieren, so lassen sich auftretende Undichtigkeiten einfach dadurch beheben, daß das zweite Klemmstück 13 noch ein Stück weit weiter in der Fig. 3 nach rechts zu dem Basiskörper 11 verschoben wird.

Fig. 4 zeigt eine Befestigungsvorrichtung 26 mit den Erfindungsmerkmalen als ein weiteres Ausführungsbeispiel. Die Befestigungsvorrichtung 26 weist einen Basiskörper 27 mit einem ersten Klemmstück 31 und einem zweiten Klemmstück 28 auf. Der Basiskörper 27 und das zweite Klemmstück 28 haben jeweils einander zugewandte Aufnahmen 29, 30 für eine Fluidleitung 20, die in Fig. 4 nicht dargestellt ist. Der Basiskörper 27 hat an seinem von dem zweiten Klemmstück 28 abgewandten Ende eine Aufnahme 32 für eine nicht in der Figur dargestellte Düse. Die Aufnahme 32 ist in einem in etwa zylinderförmigen Bereich angeordnet, der an seiner Außenumfangsfläche ein Außengewinde 35, ähnlich dem Außengewinde 15, aufweist. Im Bereich der Aufnahme 29 ist der Aufnahme 30 zugewandt ein Anschlußstück 33, ähnlich dem Anschlußstück 18, angeordnet. Das Anschlußstück 33 ist ebenfalls in etwa zylinderförmig und weist zentral eine Bohrung 34 auf, die mit der Aufnahme 32 in Verbindung steht. Auch die Aufnahme 32 hat an ihrem der Bohrung 34 zugewandten Ende einen Ventilsitz ähnlich der Aufnahme 14.

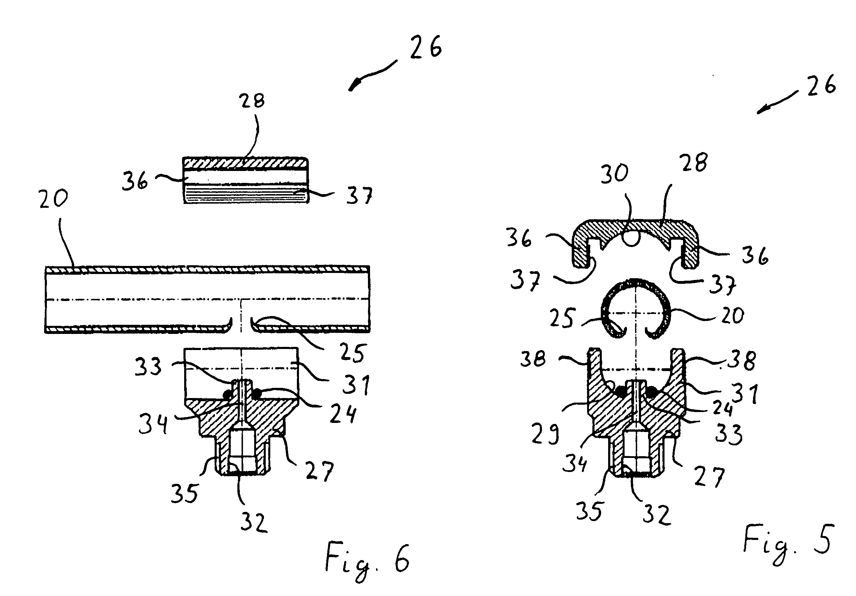

Fig. 5 zeigt die Befestigungsvorrichtung 26 in einem von der Fluidleitung 20 abgenommenen Zustand. Fig. 6 zeigt die Befestigungsvorrichtung 26 von Fig. 5 in einem um 90° gedrehten Schnitt. Das zweite Klemmstück 28 weist an voneinander abgewandten Enden jeweils Klemmsitze 36 auf, die im wesentlichen in der Fig. 5 nach unten hin abgewinkelt angeordnet sind. An ihren einander zugewandten Innenseiten weisen die Klemmsitze 36 jeweils Rastelemente 37 auf. Die Rastelemente 37 sind in Längsrichtung des zweiten Klemmstückes 28 verlaufende Stege. Die Rastelemente 37 können beispielsweise einen dreieckigen oder sägezahnförmigen Querschnitt haben.

An voneinander abgewandten Seiten hat das erste Klemmstück 31 ebenfalls Rastelemente 38, die den Rastelementen 37 jeweils zugeordnet sind. Die Rastelemente 38 können ebenfalls stegförmig sein.

Zum Befestigen der Befestigungsvorrichtung 26 auf der Fluidleitung 20 wird der Basiskörper 27 derart auf die Fluidleitung 20 aufgeschoben, daß das Anschlußstück 33 in die Öffnung der Fluidleitung 20 hineingeschoben wird und dabei von dem umgebogenen Bereich 25 gleichsam geführt wird. Als nächstes wird das zweite Klemmstück 28 radial in bezug auf die Fluidleitung 20 auf das erste Klemmstück 31 aufgeschoben. Dabei treten die Rastelemente 37 mit den diesen jeweils zugeordneten Rastelementen 38 in Eingriff. Je fester dabei das zweite Klemmstück 28 auf das erste Klemmstück 31 aufgepreßt wird, umso fester wird der Basiskörper 27 an die Fluidleitung 20 angepreßt. Auf diese Weise läßt sich mittels Aneinanderpressen des ersten Klemmstückes 31 und des zweiten Klemmstückes 28 eine feste und fluiddichte Verbindung herstellen. Sollte nach längerer Zeit des Gebrauchs der O-Ring 24 ermüden oder plastisch verformt werden, so daß eine leichte Leckage auftritt, so kann diese Leckage durch ein festeres Verpressen des ersten Klemmstückes 31 mit dem zweiten Klemmstück 28 wieder behoben werden.

Als geeignetes Material für die Befestigungsvorrichtungen 10, 26 kann Metall, wie beispielsweise Edelstahl, Kupfer oder Messing, ein Spritzgußmaterial oder ein geeignetes Kunstharzmaterial verwendet werden.

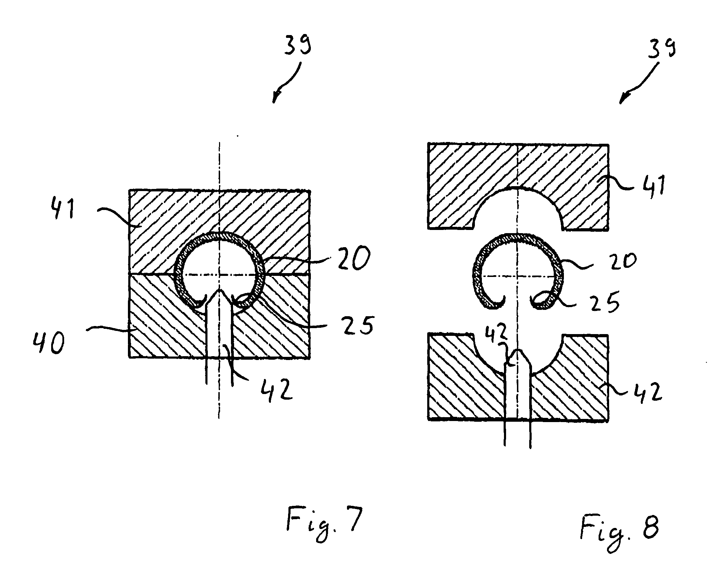

Fig. 7 zeigt ein Werkzeug 39 mit einem ersten Aufnahmestück 40 und einem zweiten Aufnahmestück 41 in einem zusammengeführten Zustand. Fig. 8 zeigt das Werkzeug 39 in einem von der Fluidleitung 20 abgenommenen Zustand. Das erste Aufnahmestück 40 und das zweite Aufnahmestück 41 bilden gemeinsam in ihrem Innern eine Aufnahme für die Fluidleitung 20. Das erste Aufnahmestück 40 weist einen nach innen gewandten Dorn 42 auf, der bei dem in Fig. 7 dargestellten zusammengepreßten Zustand die Wand der Fluidleitung 20 durchstoßen und eine Öffnung sowie die umgebogenen Bereiche 25 erzeugt hat.

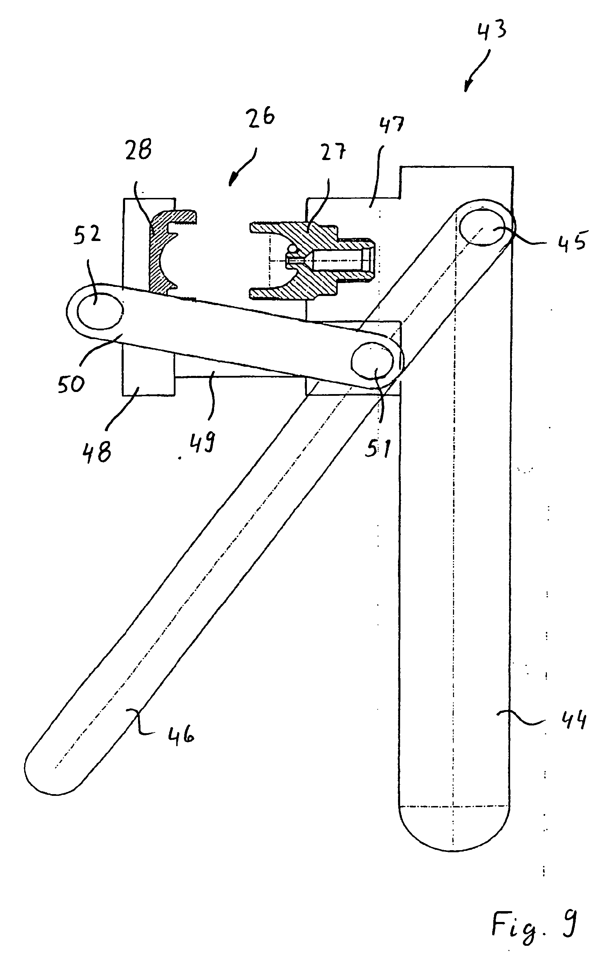

Fig. 9 zeigt ein Werkzeug 43 zum Erzeugen der Öffnungen in den Fluidleitungen 20 sowie zum Verpressen der Befestigungsvorrichtungen 26. Das dargestellte Werkzeug 43 weist ein erstes Griffstück 44 und ein mittels einer Achse 45 schwenkbar mit dem ersten Griffstück 44 verbundenes zweites Griffstück 46 auf. Im Bereich der Achse 45 ist ein erstes Druckstück 47 fest mit dem ersten Griffstück 44 verbunden. Ein zweites Druckstück 48 ist mittels einer Führung 49 linear verschiebbar an dem ersten Griffstück 44 angeordnet. Insbesondere ist das zweite Druckstück 48 entlang der Führung 49 zu dem ersten Druckstück 44 verschiebbar. Eine Zugstange 50 ist mittels einer Achse 51 schwenkbar an dem zweiten Griffstück 46 und mittels einer Achse 52 schwenkbar an dem zweiten Druckstück 48 angeordnet. Nicht in der Figur dargestellt ist eine Feder zum Vorspannen des zweiten Griffstückes 46 in die in der Fig. 9 dargestellte Position. In Fig.9 ist außerdem das zweite Klemmstück 28 der Befestigungsvorrichtung 26 in einer Aufnahme des zweiten Druckstückes 48 angeordnet. Auf ähnliche Weise ist der Basiskörper 27 der Befestigungsvorrichtung 26 in einer Aufnahme des ersten Druckstückes 47 angeordnet.

Zum Verpressen der Befestigungsvorrichtung 26 an einer Fluidleitung 20 wird nun in dem in Fig. 9 dargestellten Zustand das Anschlußstück 33 der Befestigungsvorrichtung 26 in eine Öffnung in der Fluidleitung 20 eingeführt. Anschließend wird das zweite Griffstück 46 an das erste Griffstück 44 um die Achse 45 herangeschwenkt. Dabei wird das zweite Druckstück 48 mittels der Achsen 51 und 52 von der Zugstange 50 an das erste Druckstück 47 herangezogen. Das zweite Druckstück 48, die Zugstange 50 und die Achsen 51, 52 wirken dabei gleichsam als eine Art Getriebe. Beim Heranschwenken des zweiten Griffstücks 46 an das erste Griffstück 44 wird dabei mit geringem Aufwand und ohne eine große erforderliche Kraft eine hohe Verpreßkraft der Befestigungsvorrichtung 26 erzeugt.

Anstelle des Basiskörpers 27 und des zweiten Klemmstücks 28 der Befestigungsvorrichtung 26 können auch das erste Aufnahmestück 40 und das zweite Aufnahmestück 41 des Werkzeugs 39 in die Aufnahmen des ersten Druckstücks 47 und des zweiten Druckstücks 48 eingesetzt werden. Beim Heranschwenken des zweiten Griffstücks 46 an das erste Griffstück 44 läßt sich dann mit geringem Kraftaufwand der Dorn 42 in die Außenwand einer Fluidleitung 20 hineinpressen und so ein umgebogener Bereich 25 erzeugen. Ein ungewolltes Verformen der Außenumfangswand der Fluidleitung 20 wird dabei dadurch vermieden, daß Aufnahmen im Innern des ersten Aufnahmestücks 40 und des zweiten Aufnahmestücks 41 der Außenumfangsfläche der Fluidleitung 20 entsprechen und so ein Verformen verhindern.

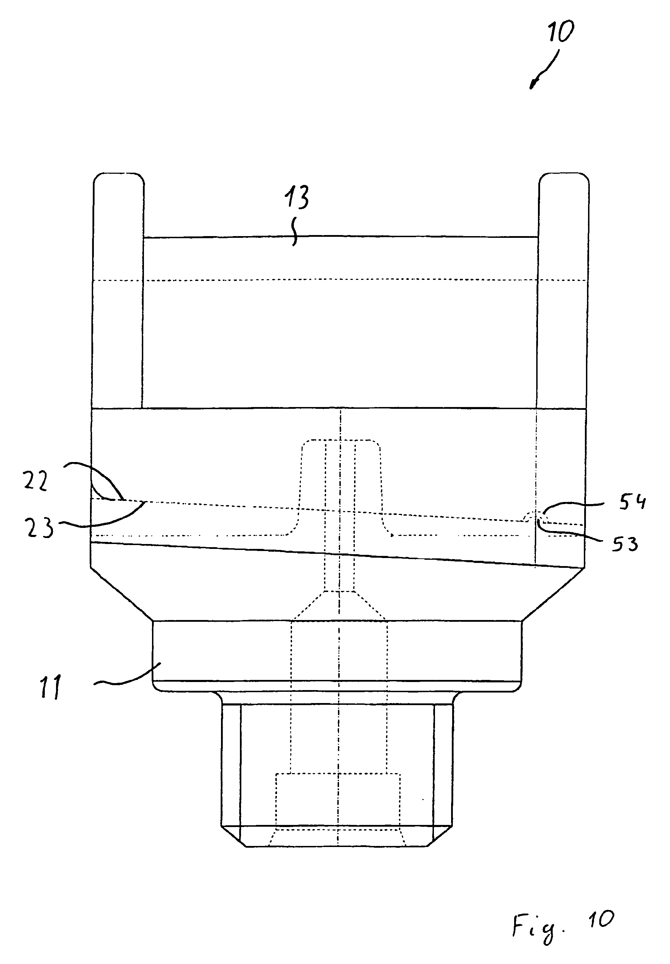

Fig. 10 zeigt ein weiteres Detail der Befestigungsvorrichtung 10. Gestrichelt eingezeichnet sind die schrägen Flächen 22, 23. Wie sich der Figur entnehmen läßt, weist die schräge Fläche 22 einen Zapfen 53 auf. Dem Zapfen 53 zugeordnet ist im Bereich der schrägen Fläche 23 eine Ausnehmung 54 angeordnet. Beim Verkeilen des zweiten Klemmstücks 13 mit dem ersten Klemmstück 12 entlang der schrägen Flächen 22, 23 treten dabei der Zapfen 53 und die Ausnehmung 54 miteinander in Eingriff, so daß ein Lösen der Klemmstücke 12, 13 voneinander verhindert wird.

### Bezugszeichenliste :

- 10: Befestigungsvorrichtung
- 11: Basiskörper
- 12: erstes Klemmstück
- 13: zweites Klemmstück
- 14: Aufnahme
- 15: Außengewinde
- 16: Aufnahme
- 17: Aufnahme
- 18: Anschlußstück
- 19: Bohrung
- 20: Fluidleitung
- 21: Klemmsitz
- 22: schräge Fläche
- 23: schräge Fläche
- 24: O-Ring
- 25: umgebogener Bereich
- 26: Befestigungsvorrichtung
- 27: Basiskörper
- 28: zweites Klemmstück
- 29: Aufnahme
- 30: Aufnahme
- 31: erstes Klemmstück
- 32: Aufnahme

- 33: Anschlußstück
- 34: Bohrung
- 35: Außengewinde
- 36: Klemmsitz
- 37: Rastelemente
- 38: Rastelemente
- 39: Werkzeug
- 40: erstes Aufnahmestück
- 41: zweites Aufnahmestück
- 42: Dorn
- 43: Werkzeug
- 44: erstes Griffstück
- 45: Achse
- 46: zweites Griffstück
- 47: erstes Druckstück
- 48: zweites Druckstück
- 49: Führung
- 50: Zugstange
- 51: Achse
- 52: Achse
- 53: Zapfen
- 54: Ausdehnung

## Patentansprüche

1. Befestigungsvorrichtung zum Befestigen einer Düse an einer Fluidleitung mit einem Basiskörper (11, 27) zum Aufnehmen einer Düse und mit einem mit dem Basiskörper (11, 27) einstückigen ersten Klemmstück (12, 31) zum Befestigen des Basiskörpers (11, 27) an der Fluidleitung (20), mit einem mit dem ersten Klemmstück (12, 31) in Eingriff bringbaren zweiten Klemmstück (13, 28), das zum Befestigen des Basiskörpers (11, 27) an der Fluidleitung (20) formschlüssig mit dem ersten Klemmstück (12, 31) verbindbar ist, und mit einem Dichtmittel (24) zum fluiddichten Abdichten einer Verbindungsstelle des Basiskörpers (11, 27) mit der Fluidleitung (20), **dadurch gekennzeichnet, dass** der Basiskörper (11, 27) ein Anschlußstück (18, 33) zum Verbinden mit dem Innenraum der Fluidleitung (20) aufweist, das zum Durchdringen der Wand der Fluidleitung (20) vorgesehen ist.

2. Befestigungsvorrichtung nach Anspruch 1, **dadurch gekennzeichnet, daß** das erste Klemmstück (12,31) und das zweite Klemmstück (13,28) einander zugeordnete schräge, insbesondere selbsthemmende, Flächen (22, 23) aufweisen, wobei beim Verschieben der Klemmstücke (12, 13) zueinander entlang der schrägen Flächen (22, 23) der Basiskörper (11) an die Fluidleitung (20) anpreßbar ist, und daß vorzugsweise Hemmelemente (53, 54) zum Verhindern eines Auseinandergleitens der schrägen Flächen (22, 23) vorgesehen sind.

3. Befestigungsvorrichtung nach Anspruch 1 oder 2, **dadurch gekennzeichnet, daß** das erste Klemmstück (12, 31) und das zweite Klemmstück (13, 28) einander zugeordnete Rastelemente (37, 38) aufweisen, die beim Zusammenpressen des ersten Klemmstückes (12, 31) und des zweiten Klemmstückes (13, 28) in Eingriff kommen und ein Lösen des ersten Klemmstücks (12, 31) und des zweiten Klemmstücks (13, 28) voneinander verhindern.

4. Befestigungsvorrichtung nach einem der vorhergehenden Ansprüche, **dadurch gekennzeichnet, daß** das erste Klemmstück (112, 31) und/oder das zweite Klemmstück (13, 28) eine Aufnahme (16, 17, 29, 30) für die Fluidleitung (20) aufweisen, wobei die Form der Aufnahme (16, 17, 29, 30) der Form der Außenumfangsfläche der Fluidleitung (20) entspricht.

5. Befestigungsvorrichtung nach einem der vorhergehenden Ansprüche, **dadurch gekennzeichnet, daß** das Dichtmittel (24) das Anschlußstück (18, 33) umgibt.

6. Verfahren zum Herstellen einer Verbindung einer Befestigungsvorrichtung nach einem der vorhergehenden Ansprüche mit einer Fluidleitung, bei dem mittels eines Dorns (42) ein Wandbereich der Fluidleitung (20) zum Erzeugen einer Öffnung durchstoßen wird, bei dem die Befestigungsvorrichtung (10, 26) der Öffnung benachbart angeordnet wird, bei dem die Befestigungsvorrichtung (10, 26) mittels Ineingriffbringens des zweiten Klemmstückes (13, 28) mit dem ersten Klemmstück (12, 31) an der Fluidleitung (20) befestigt wird, wobei das Anschlußstück (18, 33) in der Öffnung angeordnet wird und das Anschlußstück (18,33) von einem Dichtmittel (24) umgeben wird.

7. Verfahren nach Anspruch 6, **dadurch gekennzeichnet, daß** die Wand der Fluidleitung (20) die Öffnung umgebend einwärts umgebogen wird.

8. Werkzeug zum Durchführen des Verfahrens nach Anspruch 6 oder 7, mit einem ersten Druckstück (47), einem ersten Griffstück (44), einem schwenkbar daran befestigten zweiten Griffstück (46), einem an das erste Druckstück (47) herangeführten zweiten Druckstück (48), wobei mittels eines Getriebes (50, 51, 52) das zweite Druckstück (48) beim Heranschwenken des zweiten Griffstücks (46) an das erste Griffstück (44) an das erste Druckstück (47) heranschwenkbar ist, **dadurch gekennzeichnet, daß** das zweite Druckstück (48) linear an das erste Druckstück (47) herangeführt ist, und daß wahlweise zwei Aufnahmestücke (40, 41), die gemeinsam eine Aufnahme für die Fluidleitung (20) bilden, oder zwei Klemmstücke (28, 31) zum Befestigen einer Düse an einer Fluidleitung den beiden Druckstücken (47, 48) zuordnenbar sind.

9. Werkzeug nach Anspruch 8, **gekennzeichnet durch** ein dem ersten Druckstück (47) zugeordnetes erstes Aufnahmestück (40) und ein dem zweiten Druckstück (48) zugeordnetes zweites Aufnahmestück (41), die gemeinsam eine Aufnahme für die Fluidleitung (20) bilden, wobei mindestens das erste Aufnahmestück (40) oder das zweite Aufnahmestück (41) einen Dorn (42) aufweisen.

10. Werkzeug nach Anspruch 8 oder 9, **dadurch gekennzeichnet, daß** das erste Klemmstück (31) und das zweite Klemmstück (28) mittels des Werkzeugs (43) in Eingriff bringbar sind.

## Claims

1. Fixing device for fixing a nozzle to a fluid line with a base body (11, 27) for receiving a nozzle, and a first clamping part (12, 31) integrally formed with the base body (11, 27) for fixing the base body (11, 27) onto the fluid line (20), with a second clamping part (13, 28) that can be engaged with the first clamping part (12, 31) and that is connectable with the first clamping part (12, 31) in a form-fitting manner in order to fix the base body (11, 27) to the fluid line (20), and with a sealant (24) for fluid-tight sealing a connection point of the base body (11, 27) with the fluid line (20), **characterised in that** the base body (11, 27) has a connection piece (18, 33) for connecting with the interior of the fluid line (20) which is provided to pierce the wall of the fluid line (20).

2. Fixing device according to claim 1, **characterised in that** the first clamping part (12, 31) and the second clamping part (13, 28) have surfaces that slope towards one another, in particular that are self-locking, wherein on moving the clamping pieces (12, 13) towards one another along the sloping surfaces (22, 23) the base body (11) can be pressed against the fluid line (20), and/or that preferably restraining elements (53, 54) are provided to prevent the sloping surfaces (22, 23) from coming apart.

3. Fixing device according to claim 1 or 2, **characterised in that** the first clamping part (12, 31) and the second clamping part (13, 28) have fastening elements (37, 38) assigned to one another, which engage when the first clamping part (12, 31) and the second clamping part (13, 28) are pressed together and prevent the first clamping part (12, 31) and the second clamping part (13, 28) from separating from one another.

4. Fixing device according to one of the previous claims, **characterised in that** the first clamping part (112, 31) and/or the second clamping part (13, 28) have a recess (16, 17, 29, 30) for the fluid line (20), wherein the shape of the recess (16, 17, 29, 30) corresponds to the shape of the outer circumferential surface of the fluid line (20).

5. Fixing device according to one of the previous claims, **characterised in that** the sealant (24) surrounds the connection piece (18, 33).

6. Method for preparing a connection of a fixing device according to one of the previous claims with a fluid line (20), in which a wall section of the fluid line (20) is penetrated by a spike (42) to produce an opening, in which method the fixing device (10, 26) is arranged adjacent to the opening, in which method the fixing device (10, 26) is fastened to the fluid line (20) by means of meshing the second clamping part (13, 28) with the first clamping part (12, 31), wherein the connection piece (18, 33) is arranged in the opening and the connection piece is surrounded by a sealant (24).

7. Method according to claim 6, **characterised in that** the wall of the fluid line (20) surrounding the opening is bent inwards.

8. Tool for carrying out the method according to claim 6 or 7 with a first thrust piece (47), a first handle (44), onto which a second handle (46) is pivotably fastened, a second thrust piece (48) introduced onto the first thrust piece (47), wherein by means of a transmission (50, 51, 52) the second thrust piece (48) is pivotable onto the first thrust piece (47) by pivoting the second handle (46) towards the first handle (44), **characterised in that** the second thrust piece (48) is introduced linearly onto the first thrust piece (47), and that optionally two reception pieces (40, 41) that together form a recess for the fluid line (20), or two clamping pieces (28, 31) for fastening a nozzle to a fluid line, can be associated with both of the thrust pieces (47, 48).

9. Tool according to claim 8, **characterised by** a first reception piece (40) associated with the first thrust piece (47) and a second reception piece (41) associated with the second thrust piece (48), which together form a receiver for the fluid line (20), wherein at least first reception piece (40) or the second reception piece (41) possess a spike (42).

10. Tool according to claim 8 or 9, **characterised in that** the first clamping part (31) and the second clamping part (28) can be meshed by means of the tool (43).

## Revendications

1. Dispositif de fixation à fixer une buse à une conduite de fluide, comprenant un corps de base (11, 27) à recevoir une buse et une première pièce de serrage (12, 31), intégrale dudit corps de base (11, 27), à fixer ledit corps de base (11, 27) à ladite conduite de fluide (20), comprenant une deuxième pièce de serrage (13, 28) apte à être mis en prise dans ladite première pièce de serrage (12, 31), apte à être raccordé de façon positive à ladite première pièce de serrage (12, 31) afin de fixer ledit corps de base (11, 27) à ladite conduite de fluide (20), et comprenant un moyen d'étanchéité (24) pour étanchéifier une site de raccord dudit corps de base (11, 27) à ladite conduite de fluide (20) d'une façon étanche aux fluides, **caractérisé en ce que** ledit corps de base (11, 27) comprend une pièce de raccordement (18, 33) pour le raccord à l'intérieur de ladite conduite de fluide (20), qui est envisagé à pénétrer la paroi de ladite conduite de fluide (20).

2. Dispositif de fixation selon la revendication 1, **caractérisé en ce que** ladite première pièce de serrage (12, 31) et ladite deuxième pièce de serrage (13, 29) présentent des aires obliques (22, 23) affectées l'une à l'autre, en particulier à blocage automatique, dans lequel ledit corps de base (11) peut être pressé contre ladite conduite de fluide (20) quand lesdites pièces de serrage (12, 13) sont déplacées l'une relativement à l'autre le long desdites aires obliques (22, 23), et **en ce que**, de préférence, des éléments bloquants (53, 54) sont disposés afin d'empêcher un glissement de manière divergente desdites aires obliques (22, 23).

3. Dispositif de fixation selon la revendication 1 ou 2, **caractérisé en ce que** ladite première pièce de serrage (12, 31) et ladite deuxième pièce de serrage (13, 28) comprennent des éléments de verrouillage (37, 38) qui entrent en prise l'un dans l'autre, quand ladite première pièce de serrage (12, 31) et ladite deuxième pièce de serrage (13, 28) sont pressées l'une contre l'autre, en empêchant le desserrage de ladite première pièce de serrage (12, 31) et de ladite deuxième pièce de serrage (13, 28) l'une de l'autre.

4. Dispositif de fixation selon une quelconque des revendications précédentes, **caractérisé en ce que** ladite première pièce de serrage (112, 31) et/ou ladite deuxième pièce de serrage (13, 28) comprennent un logement (16, 17, 29, 30) pour ladite conduite de fluide (20), dans lequel la forme dudit logement (16, 17, 29, 30) correspond à la forme de l'aire périphérique extérieure de ladite conduite de fluide (20).

5. Dispositif de fixation selon une quelconque des revendications précédentes, **caractérisé en ce que** ledit moyen d'étanchéité (24) entoure ladite pièce de raccordement (18, 33).

6. Procédé à établir un raccord d'un dispositif de fixation selon une quelconque des revendications précédentes à une conduite de fluide, dans lequel une zone de la paroi de ladite conduite de fluide (20) est percée moyennant un mandrin (42) afin de créer une ouverture, dans lequel ledit dispositif de fixation (10, 26) est disposé à une position adjacente à ladite ouverture, dans lequel ledit dispositif de fixation (10, 26) est fixé à ladite conduite de fluide (20) en mettant ladite deuxième pièce de serrage (13, 28) en prise dans ladite deuxième pièce de serrage (12, 31), en disposant ladite pièce de raccordement (18, 33) dans l'ouverture et en enveloppant ladite pièce de raccordement (18, 33) par un moyen d'étanchéité (24).

7. Procédé selon la revendication 6, **caractérisé en ce que** la paroi de ladite conduite de fluide (20) est pliée vers l'intérieur, en entourant ladite ouverture.

8. Outil à réaliser le procédé selon la revendication 6 ou 7, comprenant un premier élément presseur (47), une première pièce de poignée (44), une deuxième pièce de poignée (46) y fixée, un deuxième élément presseur (48) approché audit premier élément presseur (47), dans lequel, quand ladite deuxième pièce de poignée (46) est approchée à ladite première pièce de poignée (44), ledit deuxième élément presseur (48) est pivotable, en l'approchant, vers ledit premier élément presseur (47) moyennant un engrenage (50, 51, 52), **caractérisé en ce que** ledit deuxième élément presseur (48) est approché audit premier élément presseur de façon linéaire, et **en ce que** deux pièces de logement (40, 41), qui coopèrent ensemble afin de constituer un logement pour ladite conduite de fluide (20), ou deux pièces de serrage (28, 31) à fixer une buse à une conduite de fluide sont affectables, à volonté, auxdits deux éléments presseurs (47, 48).

9. Outil selon la revendication 8, **caractérisé par** une première pièce de logement (40) affectée audit premier élément presseur (47) et une deuxième pièce de logement (41) affectée audit deuxième élément presseur (48), qui coopèrent l'une avec l'autre afin de constituer un logement pour ladite conduite de fluide (20), dans lequel au moins ladite première pièce de logement (40) ou ladite deuxième pièce de logement (41) comprend un mandrin (42).

10. Outil selon la revendication 8 ou 9, **caractérisé en ce qu'**il est possible de mettre ladite première pièce de serrage (31) et ladite deuxième pièce de serrage (28) en prise moyennant de l'outil (43).
